# EUROPEAN PATENT APPLICATION

(11) **EP 2 499 895 A1**
(43) Date of publication of application: **19.09.2012**
(21) Application number: 10829541.1
(22) Date of filing: 12.11.2010
(51) Int. Cl.: A01D 34/78, H02H 7/08, H02P 7/29

(54) **LAWN MOWER**

(30) Priority: 13.11.2009 CN 200910223165; 13.11.2009 CN 200910234408; 30.04.2010 CN 201010165671; 30.04.2010 CN 201010176790
(71) Applicant: Positec Power Tools (Suzhou) Co., Ltd, Suzhou, Jiangsu 215123 (CN)
(72) Inventor: BORINATO, Gianni, I-36015 Schio (VI) (IT)
(74) Representative: Craven, Ian
(86) International application number: PCT/CN2010/078679
(87) International publication number: WO 2011/057577

(57) **Abstract**

A lawn mower (1) includes a housing (3), a motor (4) which is connected with the housing and is provided with a motor shaft (6), a mowing blade (8) connected with the motor shaft and having at least one cutting edge (10), a power providing device which provides the motor with power when the lawn mower works so as to rotate the blade at a cutting speed. The lawn mower also includes a speed control device (14) which can achieve constant speed control, and the speed control device under the constant speed control state maintains the cutting speed at one predetermined constant speed at least.

## Description

### Technical Field

The present invention relates to an electric lawn mower, in particular to an electric lawn mower with a constant cutting speed.

### Description of Related Art

As a quick and efficient lawn mowing tool, lawn mowers are widely applied in urban landscaping and household weeding. Taking air pollution prevention into consideration, the electric lawn mower is more popular than the gasoline lawn mower, while the DC cordless lawn mower is the first choice of a user because of its free movement, and the DC cordless lawn mower has good speed regulation function and therefore has the advantages of stepless speed regulation, wide speed regulation scope, good low-speed performance, large starting torque, high efficiency, etc.

However, the mentioned lawn mowers still bring serious noise pollution to the urban environment.

The noise of the lawn mower is mainly generated by the high-speed rotation of the motor and the blade and usually is up to 90 db, but people feel terrible in an environment with noises of over 50 db, so the lawn mower has a very bad influence on the normal life of the nearby citizens when working.

The rotating speed of the cutting blade of the lawn mower usually ranges from 3,000-4,000 rpm, which achieves a very good cutting effect. However, when the rotating speed of the cutting blade is lowered to 3,000 rpm, short grasses still can be cut well. Besides, the reduction of the rotating speed of the lawn mower can effectively lower the noises generated by the lawn mower, but also lowers the efficiency when the lawn mower cuts high grasses. So, it is difficult to select a proper rotating speed to balance the cutting efficiency and noises; and if the noise is lowered, the lawn mower is only applicable to cutting of short grasses, which limits the use scope of the lawn mower.

### Summary of the Invention

The invention provide a low-noise lawnmower as below.

A lawn mower, comprising: a housing; a motor having a motor shaft connected to the housing; a blade having at least one cutting edge connected with the motor shaft for mowing; a power unit for supplying energy to the motor when the lawn mower works so as to drive the blade to rotate at a cutting speed; and a speed control device being selectively operated in a constant-speed control mode, when the speed control device is operated in the constant-speed control mode, the speed-control device keeping the cutting speed of the blade at a predetermined constant-speed value.

Preferably, the speed-control device is further selectively operated in a full-speed control mode, when the speed-control device is operated in the full-speed control mode, the speed control device not limiting the cutting speed.

Preferably, the lawn mower further comprising a speed selection device connected with the speed control device and configured to selectively set the speed control device at the constant-speed control mode or the full-speed control mode.

Preferably, the speed control device is configured to selectively maintain the cutting speed at a first predetermined constant-speed value or a second predetermined constant-speed value which is different from the first predetermined constant-speed value when the speed control device is operated in the constant-speed control mode. Preferably, the first predetermined constant-speed value is about 2,500 rpm, and the second predetermined constant-speed value is about 3,000 rpm.

Preferably, a speed selection device connected with the speed control device and configured to set the speed control device in order that the speed control device selectively maintains the cutting speed of the blade at the predetermined constant-speed value.

Preferably, the speed selection device is configured to selectively set the predetermined constant-speed value at about 2,500 rpm or about 3,000 rpm.

Preferably, the predetermined constant-speed value is between about 2,000 rpm to 3,800 rpm.

Preferably, the predetermined constant-speed value is between about 2,000 rpm to 3,000 rpm.

Preferably, the predetermined constant-speed value is about 2,500 rpm or about 3,000 rpm.

Preferably, the length of the blade is about 460 mm.

Preferably, the speed control device comprises a speed sensor for sensing the current speed of the blade, a comparison component for finding the deviation between the current speed and the pre-determined constant-speed value, and an energy control device for adjusting the energy supplied from the power unit to the motor in order to decrease the deviation, thereby keeping the cutting speed at the predetermined constant-speed value.

Preferably, the speed control device comprises a speed sensor for sensing the current speed of the blade, a comparison component for finding the deviation between the current speed and the predetermined constant-speed value, and an energy control device for adjusting the voltage supplied from the power unit to the motor in order to decrease the deviation, thereby keeping the cutting speed at the predetermined constant-speed value.

Preferably, the speed sensor is a Hall sensor or a photoelectric sensor.

Preferably, the energy control device is a metal oxide semiconductor (MOS) field-effect tube.

Preferably, the comparison component is a microprocessor.

Preferably, the microprocessor is configured to receive a speed signal output from the speed sensor, bring the speed signal into the calculation by proportional Integral differential algorithm to obtain a PWM signal, and output the PWM signal to an MOS field-effect tube so as to control the on-off time of the MOS field-effect tube.

Preferably, the comparison component is configured to compare the cutting speed and a predetermined locked-rotation speed value, and if the cutting speed is less than the predetermined locked-rotation speed value by a predetermined time, the energy control component stops energy supplied from a battery to a DC motor.

Preferably, the power unit is a battery mounted in the housing, and the motor is a DC motor.

Preferably, the power unit is an AC access device, and the motor is an AC motor.

The advantage of the invention comprise: The lawn mower reduces the cutting noise on the premise of ensuring the cutting effect, so that it provides good User Experience and reduces environmental pollution.

### BRIEF DESCRIPTION OF THE SEVERAL VIEWS OF THE DRAWING

Figure 1 is a three-dimensional view of the lawn mower of the invention;
Figure 2 is structural view of a speed control device of the lawn mower of the invention;
Figure 3 is circuit diagram of a speed control device of the lawn mower of the invention;
Figure 4 is a flowchart of the constant-speed control mode of the lawn mower of the invention.

### DETAILED DESCRIPTION OF THE INVENTION

The invention is described in detail according to the attached drawings.

The lawn mower of the invention may be any type, for example, an AC lawn mower, DC lawn mover, rotary lawn mover, floating type lawn mower, cylinder type lawn mower, push-type lawn mower, self-driving type lawn mower, or fully automatic lawn mover. The type of the lawn mover does not influence the implementation of the invention. The lawn mower has a power unit, if the lawn mower is an AC lawn mower, correspondingly the power unit is an AC current access device, and if the lawn mower is a DC lawn mower, correspondingly the power unit is a battery mounted in the housing.

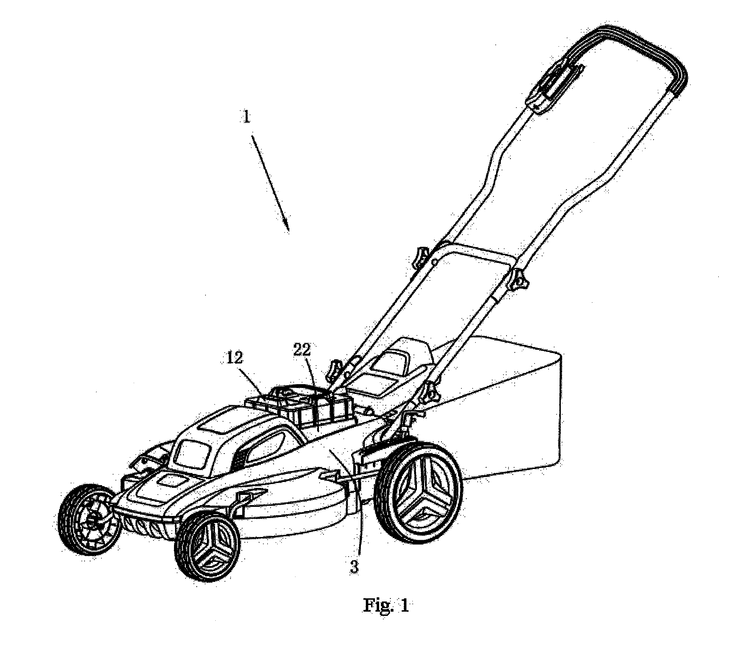

Figure 1 shows a lawn mower 1 with a speed control device and a DC motor. The lawn mower 1 comprises a housing 3, the housing 3 is provided with a groove 22, the groove 22 is used for mounting a battery 12, and the battery 12 provides energy for all parts of the lawn mower 1. Preferably, a rechargeable battery with a rated voltage of 36V and a rated current of 12A is adopted in this embodiment, or batteries of other models can also be used, for example a rechargeable battery with a rated voltage of 24V and a rated current of 17A. The housing 3 of the lawn mower 1 extends to form a handle which is held by an operator to push the lawn mower 1 to move, and the handle is provided with functional control levers of the lawn mower, such as a switch and a self-driving speed regulation lever.

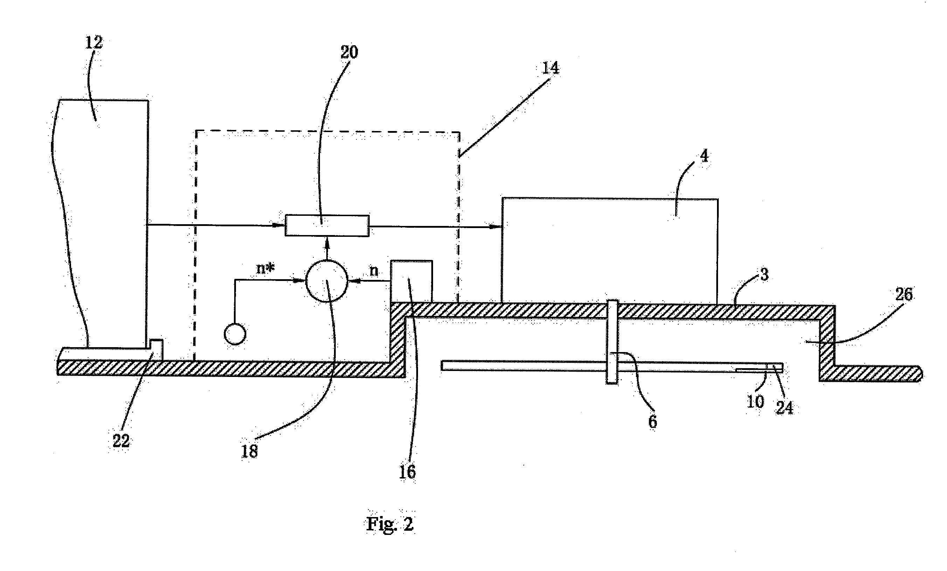

Figure 2 is the structural view of a speed control device 14 of the invention. Further, as shown in figure 2, the lawn mower 1 also comprises a motor 4 providing rotation output to drive a blade 8 to cut grasses, and the motor 4 has a motor shaft 6 outputting rotation motion. In this embodiment, the motor 4 is a DC motor, in particular a DC permanent magnet motor or DC brushless motor; the housing 3 of the lawn mower 1 is recessed inward into the inside of the lawn mower 1 to form a blade cavity 26 which contains a blade 8 for cutting and finishing the lawn, the blade 8 is directly connected with the motor shaft 6 of the motor 4, and no reduction gear system is mounted in between. One side of each of the two ends of the blade 8 is formed into a cutting edge 10 which is curved and raised, and the blade 8 has an internal recessed area 24 for lifting the cut grass. However, the blade structure is not limited to the mentioned form, for example, the blade may be integrally S-shaped or approximately linear-shaped, which does not influence the implementation of the invention. This embodiment also comprises an electric drive motor (not shown in the drawings) for driving the lawn mower 1 along the lawn required to be cut, and the drive motor is operable to be connected with the battery 12.

A speed control device 14 is located between the battery 12 and the motor 4 and comprises a speed sensor 16 close to the motor 4, the speed sensor 16 is used for monitoring the current speed n of the motor 4 and sending the monitored current speed n to a comparison component 18. The comparison component 18 is selectable to have or not have a predetermined constant-speed value n*. If the comparison component 18 has the predetermined constant-speed value n*, the speed control device 14 is in constant-speed control mode. The comparison component 18 compares the current speed n sent from the speed sensor 16 with the predetermined constant-speed value n*, deducts the predetermined constant-speed value n* with the current speed n to obtain a deviation Δn, and transmits the Δn related signal to an energy control component 20. The energy control component 20 adjusts the energy supplied from the battery 12 to the motor 4 according to the signal output from the comparison component 18. Specifically, when the current speed n is larger than the predetermined constant-speed value n*, and the deviation Δn is larger than 0, the energy control component 20 reduces the energy supplied from the battery 12 to the motor 4 to reduce the current speed n, and then deviation Δn is reduced to approach 0; when the current speed n is less than the predetermined constant-speed value n*, and the deviation Δn is less than 0, the energy control component 20 increases the energy supplied from the battery 12 to the motor 4 to increase the current speed n, and then the deviation Δn is increased to approach 0; the speed control device 14 continuously adjusts the energy supplied from the battery 12 to the motor 4 according to the deviation Δn, to ensure that the speed of the motor 4 is kept at the predetermined constant-speed value n*. When the comparison component 18 does not have the predetermined constant-speed value n*, the speed control device 14 does not limit the rotating speed of the motor and is in the full-speed control mode. It should be noted that the cutting speed of the blade is equal to the current speed n of the motor because the motor shaft 6 of the motor 4 is directly connected with the blade 8.

The predetermined constant-speed value n*of the comparison component 18 is selectable, and the operator can make the choice according to the working requirements. The predetermined constant-speed value n* can be set by means of stepless speed regulation or shift regulation. In this embodiment, the speed control device 14 have two shifts of adjustable predetermined constant-speed value n*, respectively 2,500 rpm and 3,000 rpm.

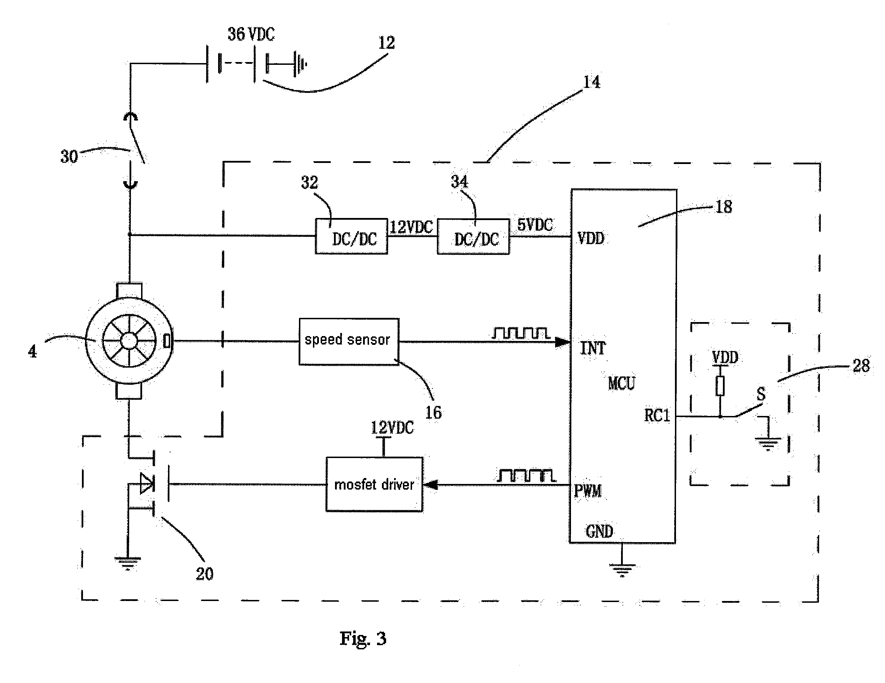

Figure 3 is a diagram of the speed control device 14 of the invention. The circuit comprises a main switch 30 for switching on and off the whole circuit; the specific form of the comparison component 18 is a micro control unit (MCU), the specific form of the speed sensor 16 is a Hall sensor or photoelectric sensor, and the specific form of the energy control component 20 is a MOS field-effect tube (MOSfet). Those skilled in the field shall know that those components have various options and are not limited by the example in the circuit diagram, for example, the comparison component 18 may also be an analogue comparison, and the speed sensor may be any type of rotating speed sensor.

The micro control unit is the master chip of the lawn mower 1 in this embodiment. It is used for monitoring the signals of the specific working parameters of the lawn mower and sending corresponding working instructions according to the signal calculation results. For example, the master chip sends a shutdown instruction when the lawn mower 1 encounters locked rotation; when the operator sets the rotating speed of the blade to be 2,500 rpm, the micro control unit makes the motor to drive the blade to rotate at a basically constant speed of 2,500 rpm. Industrially, the rotating speed of the blade is allowed to have an error of +/-5%, which means that the 2,500 rpm floats around the 2,500 rpm, ranging from 2,375rpm and 2,625 rpm.

The circuit also comprises a power supply, namely a rechargeable battery 12. The battery 12 is connected with the micro control unit via the main switch 30, a first voltage transformer circuit 32 and a second voltage transformer circuit 34 to provide a stable 5V power to the micro control unit.

The circuit also comprises a motor 4 which is a DC permanent magnet motor. The motor 4 together with the energy control component 20 which is a MOS field-effect tube is connected with the battery 12 and the main switch 30 in series.

The circuit comprises a motor speed monitoring portion. As mentioned above, the rotating speed of the motor 4 can be directly monitored by various revolution speed sensor or indirectly calculated by monitoring the voltage or current of the motor 4, and the detailed description thereof is omitted here. In this embodiment, the Hall sensor is used to sense the current speed n of the motor, this is realized by the following way: the motor shaft 6 is sleeved with four pairs of polar magnet rings, the hall sensor is set at a position close to the polar magnet rings, and then when the motor shaft rotates in a circle, the hall sensor outputs four square-wave voltage signals to the speed signal input end of the micro control unit. The micro control unit can calculate the current speed n of the motor by the number of the voltage square-wave signals collected in unit time. As mentioned above, the motor 4 and the blade 8 have no reduction gear in between, which means that the current speed n of the motor 4 is equal to the cutting speed of the blade 8 of the lawn mower; however, the motor 4 and the blade 8 may have a reduction gear in between.

The circuit also comprises an energy control component 20 which is a MOS field-effect tube. The MOS field-effect tube is capable of quickly switching on and off according to the received PWM (pulse-width modulating) signal. In this embodiment, the micro control unit outputs the PWM signal at a frequency of 2,000HZ, which means that the PWM signal has an output period T=0.5ms. The PWM signal is amplified by the drive circuit of the MOS field-effect tube, increased from 5V to 12V to drive the MOS field-effect tube to perform on-off switching. In the period of T, the pulse signal has a high level and a low level, and the ratio of the lasting time of the high level to the lasting time of the low level in the period T is the variable pulse width modulation frequency-width ratio. When the pulse signal is at a high level, the MOS field-effect tube is switched on, at this time the voltage of the battery 12 can be applied onto the motor 4 of the MOS field-effect tube; when the pulse signal is at a low level, the MOS field-effect tube is switched off, at this time the voltage of the battery 12 cannot be applied onto the motor 4 by the MOS field-effect tube (but the current can flow via a diode). Thus, by adjusting the pulse frequency-width ratio of the MOS field-effect tube, the time that the voltage is effectively applied onto the motor 4 in period T can be adjusted, which means the energy transmitted to from the battery 12 to the motor 4 in period T and the voltage on both ends of the battery 12 in a certain period of time in the macro view can be adjusted. The period T lasts for a short time, so the operator always feels that the motor 4 is driven.

The circuit also comprises a speed selection device 28 which is connected to the terminal of the micro control unit to set the state of the comparison component 18 (namely the microprocessor) and the speed control device 14 of the lawn mower 1 via the change of the level, so the operator can select means to control the rotating speed of the motor 4 and the blade 8. In this embodiment, the speed selection device 28 has three speed options, respectively 2,500 rpm constant speed, 3,000 rpm constant speed and full speed. The speed selection device 28 may be a speed shifting knob, a speed shifting button (there may be many buttons corresponding to different speeds), a slidable speed shifting rod, a speed shifting lever, etc.

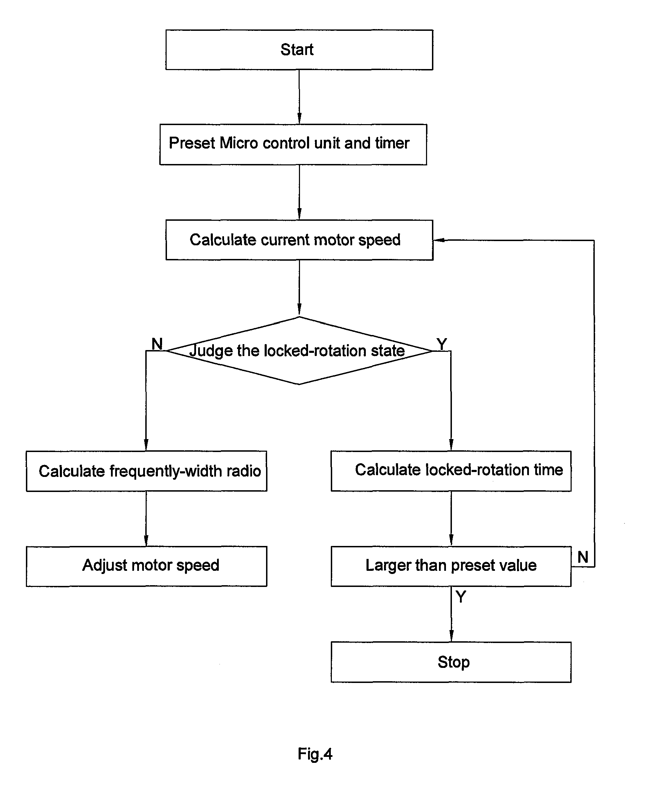

Figure 4 is a flowchart of the constant-speed control mode of the invention.

As shown in figure 4, when the main switch is turned on, the control circuit is powered on, and the micro control unit is preset, wherein the presetting includes the initialization of a register in the micro control unit and the resetting adjustment of the timer. At this stage, the micro control unit reads the signal input by a speed setting portion to set the pre-determined constant-speed value n*.

After the micro control unit is preset, followed by the locked-rotation judgment stage.

In some cases, for example, the blade 8 is collided with an object, or the lawn mower 1 cuts tall grasses, the blade 8 of the lawn mower 1 decelerates suddenly, and then the current generated by the motor 4 is suddenly increased to a very high level. In such circumstances, to protect the motor 4 and the drive circuit, the lawn mower 1 shall be powered off.

The micro control unit receives the voltage square-wave signal sent from the hall sensor and calculates the current speed n of the motor 4 and the current speed n of the blade 8 by the number of the square-wave signals collected in unit time. Then, the current speed n of the motor 4 is compared with the preset locked-rotation speed n_{d}, if n is larger than n_{d}, then the lawn mower 1 is judged to not encounter locked-rotation and the program enters the next stage; if n is less than n_{d}, it begins to count, if n rises to be larger than n_{d} in the preset locked-rotation time t_{d}, then the lawn mower 1 is judged to not have encountered locked-rotation and the program enters the next stage; and if n is always less than n_{d} in the preset locked-rotation time t_{d}, then the lawn mower 1 is judged to have encountered locked-rotation, the micro control unit turns off the motor 4 and then the lawn mower 1 stops. Practically, the preset locked-rotation speed is set to be between 100 rpm and 400 rpm, and the preset locked-rotation time is set to be 2s and 5s. In this embodiment, preferably, the preset locked-rotation speed n_{d} is set to be 200 rpm, and the preset locked-rotation time is set to be 3s.

If the lawn mower 1 is judged to have not encountered locked-rotation at the locked-rotation judgment stage, the program enters the speed control stage.

As mentioned above, the speed control principle is as follows: in constant-speed control mode, the micro control unit has a present constant-speed speed value n*, the micro control unit controls the frequency-width ratio of the output PWM signal to change the switch-on time of the MOS field-effect tube; when the MOS field-effect tube is switched on, the two ends of the motor 4 have the 12V voltage of the DC battery, and when the MOS field-effect tube is switched off, the two ends of the motor 4 have no voltage; thus, by adjusting the frequency-width ratio of the output PWM signal, the time cost to effectively apply the voltage onto the motor 4 in a certain period can be adjusted, the voltage applied onto the two ends of the motor 4 and the energy output by the battery 12 in a certain period can be further adjusted in macro view, and finally the current speed n can be adjusted. When the current speed n of the motor 4 is less than the predetermined constant speed value n*, the micro control unit reduces the frequency-width ratio of the output PWM signal, the voltage at the two ends of the motor 4 and the received energy are increased, and then the current speed n of the motor 4 is enhanced to approach the predetermined constant speed value n*; when the current speed n of the motor 4 is larger than the predetermined constant speed value n*, the micro control unit increases the frequency-width ratio of the output PWM signal, the voltage at both ends of the motor 4 and the received energy are reduced, and then the current speed n of the motor 4 is reduced as it approaches the predetermined constant speed value n*.

Specifically, the micro control unit compares the current speed n of the motor 4 and the predetermined constant speed value n* to obtain the deviation Δn and then calculates the PWM signal output to reach the predetermined constant speed value n* according to the deviation Δn, the PWM signal is amplified by the drive circuit of the MOS field-effect tube and transmitted to the MOS field-effect tube to control the energy transmitted from the battery 12 to the motor 4 in a specific time, and thus, the predetermined constant speed value n* is obtained.

In this embodiment, the micro control unit adopts a proportion-integral-differential (PID) algorithm to calculate the output pulse frequency-width ratio. The PID algorithm is a control algorithm usually adopted in the industry. Under the PID control, the corresponding numerical values of the proportion, integral and differential and the sum of the three are calculated by this algorithm to count the real output.

Furthermore, this embodiment adopts an incremental PID algorithm. During the adjustment, the microprocessor samples the motor speed for calculation every 50ms and stores the results. The microprocessor performs PID calculations according to the current speed, the previous speed and the further previous speed to obtain the output pulse width modulation frequency-width ratio signal.

Specifically, the frequency-width ratio of the PWM signal is obtained by the following calculation method.

First, the hall sensor measures the current speed n of the motor 4 and outputs the voltage square-wave signal to the micro control unit.

Second, the micro control unit records the current speed n of the motor 4, the previous speed n1 and the further previous speed n2 and calculates the deviations thereof. Third, according to the deviation, the pulse width modulation frequency-width ratio (PWM duty ratio) is adjusted.

Fourth, the MOS field-effect tube adjusts the voltage at the two ends of the motor 4 according to the received signal and controls the speed to approach to the predetermined constant speed value.

Then, the program returns to the stage of calculating the current speed n of the motor 4 to judge the locked-rotation, calculate the pulse width modulation frequency-width ratio and adjust the speed of the motor 4 by the mentioned method; the operations are circled until the lawn mower 1 stops.

The following is the description on the selection of the predetermined constant speed value n*.

Usually, the speed is in proportion to the noise: the speed rises, the noise becomes higher; the speed declines and the noise becomes lower. Meanwhile, the speed is in proportion to the cutting efficiency: the speed rises, and then the cutting efficiency is increased; the speed declines, and then the cutting speed is also reduced. Therefore, the noise and cutting efficiency must be taken into consideration at the same time, and a proper speed shall be selected to balance the noise and the cutting efficiency.

In use, if the lawn mower is used to cut certain grasses in a special way, and the efficiency is not required to be very high, in such circumstance, the high speed fails to improve the cutting efficiency considerably, and also brings extra noise pollution. Usually, the standard grass height is 90 mm high, and the lawn mower 1 has a cutting depth control device to selectively cut the grass at different heights. The operator does not always cut the grass to the root. As seen in this field, the lawn mower 1 in this embodiment has six cutting shifts: the cutting depth and the rotating speed rise gradually from the first shift to the sixth shift. Under the condition that the grass density is standard, at the rotating speed of 2,000 rpm, the lawn mower 1 has a good cutting efficiency at the first and second shifts; at the cutting speed of 2,500 rpm, the lawn mower 1 still has a good cutting efficiency at the shifts 1 to 4; and at the rotating speed of 3,000 rpm, the lawn mower 1 has a good cutting efficiency at all six shifts. If the noise is taken into consideration, when the rotating speed is 2,000 rpm, the noise is very low, and the lawn mower 1 can be only used to cut shallow grasses. When the rotating speed rises to 2,500 rpm, the noise is raised, but still acceptable, and the lawn mower 1 can grasses at the shifts 1-4; moreover, when the rotating speed rises to 3,000 rpm, the noise is further raised, and the lawn mower can be applied to a larger scope to cut the grasses with standard height at all shifts. Thus, the rotating speeds of 2,500 rpm and 3,000 rpm are of high practicability and applicability because the noise is low and the application scope of the lawn mower is wide. However, the lawn with a density more than that of the standard lawn is common. To ensure the cutting efficiency as much as possible and control the noise, the lawn mower 1 may further have a 3,800 rpm predetermined constant speed value.

Meanwhile, it should be noted that the cutting noise and the blade length of the lawn mower are correlated. Specifically, if the blade is longer, then the noise is higher at the same rotating speed, meanwhile the cutting efficiency of the blade is higher. In this embodiment, the best effect is realized with a 460 mm blade with a 2,500 rpm predetermined constant speed value and a 3,000 rpm predetermined constant speed value.

The above embodiment is only a preferable implementation scheme. During design, a proper predetermined constant speed value can be selected from the scope of 2,000-3,000 rpm according to the regional difference and use habits; to control the noise as much as possible, the predetermined constant speed value shall be selected from scope of 2,000-3,000 rpm, such as 2,100 rpm, 2,400 rpm, 2,700 rpm, etc.

Testing shows that: in this embodiment, when the environmental noise is about 50 db, the cutting noise is about 73 db if the lawn mower rotates at a constant speed of 2,500 rpm and about 76 db if the lawn mower rotates at a constant speed of 3,000 rpm, which is far lower than the noise of about 95 db generated by the common lawn mower. Therefore, the lawn mower in this embodiment has two predetermined constant-speed values, respectively 2,500 rpm and 3,000 rpm. The noise generated by the lawn mower with a rotating speed of between 2,000 rpm and 3,000 rpm is still acceptable, and the lawn mower with such a rotating speed can be applied to the actual mowing operation. Furthermore, the lawn mower 1 in this embodiment also has a full-speed shift, at this shift the micro control unit just judges whether the lawn mower 1 encounters locked rotation and does not limit the cutting speed of the lawn mower 1, so the lawn mower 1 is suitable for mowing a lawn with a high grass density. In such circumstances, the most important thing is the working efficiency, followed by the noise control. Actually, as an emergency standby shift, the full-speed shift is hardly used and even can be concealed by the existence of the mentioned two predetermined constant-speed shifts. The actual statistic data shows that: a user with a household lawn mower usually mows the lawn every two weeks in the season when the lawn grows quickly and every three weeks in the season when the lawn grows slowly. In the season when the lawn grows most vigorously, the 2,000 rpm constant speed can meet the demands of cutting the lawn every two weeks. At the 2,500 rpm / 3,000 rpm constant speed, the lawn mower can work every 3 or 4 weeks without overloading. Therefore, unless the user does not mow the lawn for over 1 month, or the lawn is a variety growing most vigorously (which is very rare among household users), the full-speed shift is not used, while a user needing the large-power lawn mower usually selects a gasoline lawn mower. According to the statistics, the possibility of applying the full-speed shift does not exceed 2/1,000 for the major market of the DC lawn mower.

In this embodiment, instead of stepless regulation, the predetermined constant-speed value is adopted because the predetermined constant-speed value is considerably superior.

First, the predetermined constant-speed value can save debugging time for the user. When the user uses the lawn mower with the variable constant-speed value, a proper rotating speed must be selected to balance the noise and the efficiency. If the stepless regulation is adopted, the user has to try repeatedly to find a proper constant-speed value, which may cost a long time and make the user irritable. The experiments of the final users show that: without the preset shift, the user has to try repeatedly 5-7 times to find the desirable cutting speed, and all users reflect that this procedure is disgusting or very disgusting. If the predetermined constant-speed value is set, the trying procedure can be avoided, and the final user can select a preset shift to obtain the proper cutting speed that balances the noise and the efficiency.

Second, the predetermined constant-speed value can realize the optimal cutting speed. The cutting speed found by the user him/herself may be not the real optimal one because the judgment made by the user in virtue of his/her experience may have deviation; the most important is that: without a precise instrument for judging the actual decibels of the noise and the attenuation of the noise at a certain distance, the user usually evaluates the noise decibels by direct feeling when operating the lawn mower and is difficult to make a judgment on the noise decibels at a certain distance, which means that the operator has a difficult time evaluating the noise pollution caused by the surroundings and the neighborhoods. Actually, the noise pollution caused by the lawn mower on the surroundings is an important factor of the speed setting because the noise at the centre of the lawn cannot be reduced to a level without influence on the operator, while the noise pollution at a certain distance can be considerably improved by speed control. Meanwhile, the experiments made by the final users show that: when making the judgment on the speed shift just according to the noise at the centre of the lawn mower, about 60% of the users tend to select the large speed and neglect the noise; 20% tend to select the low speed which prolongs the mowing time; and only 20% are able to select the real optimal speed. By the means of predetermining the constant-speed value, the manufacturer can accurately judge the noise data of each distance segment at various rotating speeds with a noise test instrument via precise test and obtain the cutting efficiency so as to set the optimal predetermined constant-speed value.

Third, predetermining the constant-speed value can provide customized optimal speed for different regions according to different grass densities. As mentioned above, the optimal speeds for balancing the noise and the cutting efficiency varies with the regions, grass densities and other special situations. Therefore, the manufacturer can set different predetermined cutting speeds for different situations by testing to provide the customized noise reduction scheme.

The following is another embodiment of the invention.

In this embodiment, the motor 4 is an AC motor, and the lawn mower 1 is directly connected with the mains supply and does not require the rechargeable battery. Similar to the first embodiment, the lawn mower 1 has a speed control device 14, the speed control device 14 comprises a speed sensor 16 close to the motor 4, and the speed sensor 16 is used for monitoring the current speed n of the motor 4 and sends the monitored current speed n to the comparison component 18. The comparison component 18 is selectable to have or not have a predetermined constant-speed value n*. If the comparison component 18 has the predetermined constant-speed value n*, the speed control device 14 is in constant-speed control mode. The comparison component 18 compares the current speed n of the motor 4 transmitted by the speed sensor 16 with the predetermined constant-speed value n*, deducts the predetermined constant-speed value n* by the current speed n to obtain a deviation Δn, and outputs the deviation Δn-related signal to an energy control component 20. The energy control component 20 adjusts the energy supplied from a power unit to the motor 4 according to the signal output from the comparison component 18. Specifically, when the current speed n is larger than the predetermined constant-speed value n*, and the deviation Δ n is larger than 0, the energy control component 20 reduces the energy supplied from the power unit to the motor 4 to reduce the current speed n, and then deviation Δn is reduced to approach 0; when the current speed n is less than the predetermined constant-speed value n*, and the deviation Δn is less than 0, the energy control component 20 increases the energy supplied from the power unit to the motor 4 to increase the current speed n, and then the deviation Δn is increased to approach 0; the speed control device 14 continuously adjusts the energy supplied from the battery 12 to the motor 4 according to the deviation Δn, to ensure that the speed of the motor 4 is kept at the predetermined constant-speed value n*. If the comparison component 18 has the predetermined constant-speed value n*, the speed control device 14 has no limit on the rotating speed of the motor and is in the full-speed control mode. It should be noted that the motor shaft 6 and blade 8 of the motor 4 are directly connected, so the cutting speed of the blade is equal to the current speed n of the motor.

The lawn mower also comprises a speed selection device 28 which sets the state of the comparison component 18 and the speed control device 14 according to the change of the level, so the operator can select the means for controlling the rotating speeds of the motor 4 and the blade 8. In this embodiment, a speed selection device 28 may have three speed options, respectively 2,500 rpm constant speed, 3,000 rpm constant speed and full speed. The speed selection device 28 may be a speed shifting knob, a speed shifting button (there may be many buttons corresponding to different speeds), a slidable speed shifting rod, a speed shifting lever, etc.

The lawn mower provided by the invention greatly reduces the cutting noise on the premise of ensuring the cutting effect, particularly achieving a considerable noise reduction effect in case of low cutting height.

## Claims

1. A lawn mower, comprising:
a housing;
a motor having a motor shaft connected to the housing;
a blade having at least one cutting edge connected with the motor shaft for mowing;
a power unit for supplying energy to the motor when the lawn mower works so as to drive the blade to rotate at a cutting speed;
**characterised in that**: a speed control device being selectively operated in a constant-speed control mode, when the speed control device is operated in the constant-speed control mode, the speed-control device keeping the cutting speed of the blade at a predetermined constant-speed value.

2. The lawn mower according to claim 1, **characterised in that**: the speed-control device is further selectively operated in a full-speed control mode, when the speed-control device is operated in the full-speed control mode, the speed control device not limiting the cutting speed.

3. The lawn mower according to claim 2, **characterised in that**: further comprising a speed selection device connected with the speed control device and configured to selectively set the speed control device at the constant-speed control mode or the full-speed control mode.

4. The lawn mower according to claim 3, **characterised in that**: the speed control device is configured to selectively maintain the cutting speed at a first predetermined constant-speed value or a second predetermined constant-speed value which is different from the first predetermined constant-speed value when the speed control device is operated in the constant-speed control mode.

5. The lawn mower according to claim 4, **characterised in that**: the first predetermined constant-speed value is about 2,500 rpm, and the second predetermined constant-speed value is about 3,000 rpm.

6. The lawn mower according to claim 1, **characterised in that**: further comprising a speed selection device connected with the speed control device and configured to set the speed control device in order that the speed control device selectively maintains the cutting speed of the blade at the predetermined constant-speed value.

7. The lawn mower according to claim 6, **characterised in that**: the speed selection device is configured to selectively set the predetermined constant-speed value at about 2,500 rpm or about 3,000 rpm.

8. The lawn mower according to claim 1, **characterised in that**: the predetermined constant-speed value is between about 2,000 rpm to 3,800 rpm.

9. The lawn mower according to claim 1, **characterised in that**: the predetermined constant-speed value is between about 2,000 rpm to 3,000 rpm.

10. The lawn mower according to claim 1, **characterised in that**: the predetermined constant-speed value is about 2,500 rpm or about 3,000 rpm.

11. The lawn mower according to claim 1, **characterised in that**: the length of the blade is about 460 mm.

12. The lawn mower according to claim 1, **characterised in that**: the speed control device comprises a speed sensor for sensing the current speed of the blade, a comparison component for finding the deviation between the current speed and the pre-determined constant-speed value, and an energy control device for adjusting the energy supplied from the power unit to the motor in order to decrease the deviation, thereby keeping the cutting speed at the predetermined constant-speed value.

13. The lawn mower according to claim 1, **characterised in that**: the speed control device comprises a speed sensor for sensing the current speed of the blade, a comparison component for finding the deviation between the current speed and the predetermined constant-speed value, and an energy control device for adjusting the voltage supplied from the power unit to the motor in order to decrease the deviation, thereby keeping the cutting speed at the predetermined constant-speed value.

14. The lawn mower according to claim 13, **characterised in that**: the speed sensor is a Hall sensor or a photoelectric sensor.

15. The lawn mower according to claim 13, **characterised in that**: the energy control device is a metal oxide semiconductor (MOS) field-effect tube.

16. The lawn mower according to claim 13, **characterised in that**: the comparison component is a microprocessor.

17. The lawn mower according to claim 16, **characterised in that**: the microprocessor is configured to receive a speed signal output from the speed sensor, bring the speed signal into the calculation by proportional Integral differential algorithm to obtain a PWM signal, and output the PWM signal to an MOS field-effect tube so as to control the on-off time of the MOS field-effect tube.

18. The lawn mower according to claim 13, **characterised in that**: the comparison component is configured to compare the cutting speed and a predetermined locked-rotation speed value, and if the cutting speed is less than the predetermined locked-rotation speed value by a predetermined time, the energy control component stops energy supplied from a battery to a DC motor.

19. The lawn mower according to claim 1, **characterised in that**: the power unit is a battery mounted in the housing, and the motor is a DC motor.

20. The lawn mower according to claim 1, **characterised in that**: the power unit is an AC access device, and the motor is an AC motor.
